# FASCICULE DE BREVET EUROPEEN

(11) **EP 3 482 254 B1**
(45) Date de publication et mention de la délivrance du brevet: **19.04.2023**
(21) Numéro de dépôt: 17733859.7
(22) Date de dépôt: 30.06.2017
(51) Int. Cl.: G02F 1/1335, G02B 27/01

(54) **DISPOSITIF DE GÉNÉRATION D'IMAGES POUR AFFICHEUR TÊTE-HAUTE ET PROCÉDÉ DE PILOTAGE D'UN TEL DISPOSITIF**
BILDERZEUGUNGSVORRICHTUNG FÜR EINE HEAD-UP-ANZEIGE UND VERFAHREN ZUR STEUERUNG SOLCH EINER VORRICHTUNG
IMAGE-GENERATION DEVICE FOR A HEAD-UP DISPLAY AND METHOD FOR CONTROLLING SUCH A DEVICE

(30) Priorité: 05.07.2016 FR 1656443
(43) Date de publication de la demande: 15.05.2019
(73) Titulaire: Valeo Comfort and Driving Assistance, 94046 Créteil Cedex (FR)
(72) Inventeur: IRZYK, Michael, 94046 Créteil CEDEX (FR)
(74) Mandataire: Delplanque, Arnaud
(86) Numéro de dépôt international: PCT/EP2017/066398
(87) Numéro de publication internationale: WO 2018/007268

(56) Documents cités:
- WO-A1-2016/070532
- US-A1- 2010 220 047
- US-A1- 2012 133 673
- US-A1- 2016 103 263

## Description

### DOMAINE TECHNIQUE AUQUEL SE RAPPORTE L'INVENTION

La présente invention concerne de manière générale les dispositifs d'aide à la conduite de véhicules automobiles.

Elle concerne plus particulièrement un dispositif de génération d'images pour afficheur tête-haute, comprenant :
- une source de lumière,
- un modulateur de lumière adapté à moduler spatialement la lumière émise par la source de lumière, et
- un calculateur adapté à piloter la source de lumière et le modulateur de lumière de telle manière qu'ils génèrent une image.

Elle concerne également un procédé de pilotage d'un tel dispositif.

### ARRIÈRE-PLAN TECHNOLOGIQUE

Pour faciliter et rendre plus sûre la conduite d'un véhicule automobile, on souhaite éviter que le conducteur ne soit forcé de détourner son regard de la route qu'il emprunte.

Pour cela, il est connu d'utiliser un afficheur tête-haute, adapté à projeter à l'extérieur du véhicule des informations (vitesse du véhicule, direction à suivre, dysfonctionnement du moteur, présence d'obstacle, ...) à la hauteur du regard du conducteur.

On connaît différentes technologies d'afficheurs tête-haute. Parmi celles-ci, on connaît notamment les afficheurs tête-haute à modulation de lumière.

De tels afficheurs tête-haute peuvent par exemple comporter un écran à cristaux liquides et un dispositif de rétroéclairage placé à l'arrière de l'écran. Ces éléments permettent ainsi de générer une image pouvant être projetée dans le champ de vision du conducteur, via par exemple un miroir de repliement et une lame semi-réfléchissante (communément appelée « combineur ») située dans l'axe du regard du conducteur.

Dans cette solution technique, le dispositif de rétroéclairage est prévu pour illuminer continuellement l'arrière de l'écran tandis que l'écran est conçu pour bloquer le passage de la lumière dans certaines zones, afin de générer une image comportant les informations désirées.

Un tel afficheur tête-haute présente pour inconvénient majeur une consommation importante en énergie électrique. On observe d'ailleurs que cette consommation demeure identique quel que soit le nombre d'informations à afficher.

Un autre inconvénient est que le blocage par l'écran de la lumière émise par le dispositif de rétroéclairage n'est pas totalement efficace, si bien qu'on peut observer un halo de lumière sur l'ensemble du combineur (on parle d' « effet carte-postale ») qui est au moins inesthétique, voire gênant pour le conducteur.

Le document US 2016/103263 A1 divulgue un dispositif d'affichage dans lequel des écrans indépendants sont rétro éclairés par des diodes associées chacune à une lentille. Chaque diode est contrôlable indépendamment des autres diodes. le document US 2010/220047 A1 divulgue un dispositif d'affichage dans lequel le dispositif de rétro éclairage est divisé en blocs.

### OBJET DE L'INVENTION

Afin de remédier aux inconvénients précités de l'état de la technique, la présente invention propose un dispositif de génération d'images tel que défini dans la revendication 1. Des modes de réalisation supplémentaires sont définis dans les revendications dépendantes. Un afficheur tête haute comportant un dispositif tel que défini dans les revendications 1 à 8 est défini dans les revendications 9 et 10. Un procédé de pilotage d'un dispositif tel que défini dans l'une des revendications 1 à 8 est défini dans la revendication 11.

Ainsi, grâce à l'invention, seules les parties du modulateur de lumière devant afficher des informations sont éclairées par les éléments lumineux de la source de lumière. Les autres éléments lumineux sont en revanche laissés éteints, si bien que les parties du modulateur de lumière ne devant afficher aucune information ne sont pas éclairées.

De cette manière, la consommation électrique de la source de lumière s'en trouve largement réduite. Par ailleurs, puisque certains des éléments lumineux sont éteints, le halo de lumière visible sur le combineur s'en trouve réduit.

D'autres caractéristiques avantageuses et non limitatives du dispositif de génération d'images conforme à l'invention sont les suivantes :
- il est prévu un ensemble optique qui s'interpose entre la source de lumière et le modulateur de lumière et qui conditionne la lumière émise par chaque élément lumineux vers une zone efficace correspondante du modulateur de lumière ;
- l'ensemble optique est tel que chaque zone efficace du modulateur de lumière est distincte des autres zones efficaces et contigu à d'autres zones efficaces ;
- l'image à générer étant composée de différentes parties chacune adaptée à être formée par une des zones efficaces du modulateur de lumière et par l'élément lumineux correspondant, le calculateur comporte des moyens d'acquisition de l'image à générer, des moyens de détection adaptés à contrôler si, dans chaque partie de l'image à générer, se trouve une information à afficher, et des moyens de pilotage de la source de lumière adaptés à illuminer seulement les éléments lumineux correspondant aux parties de l'image dans lesquelles se trouve une information à afficher ;

- les éléments lumineux sont situés dans un même plan ;
- tout ou partie des éléments lumineux sont situés sur une surface courbe ;
- les éléments lumineux sont répartis en colonnes et en lignes ;
- il est prévu au moins trois lignes d'éléments lumineux et au moins quatre colonnes d'éléments lumineux ;
- le modulateur de lumière comporte un écran transmissif et la source de lumière est adaptée à rétroéclairer ledit écran transmissif ; ou
- le modulateur de lumière comporte un panneau réflectif composé de volets pouvant prendre deux états distincts, à savoir un état dans lequel le volet réfléchit la lumière reçue de la source de lumière et un état dans lequel le volet ne réfléchit pas la lumière reçue de la source de lumière.

L'invention concerne aussi un afficheur tête-haute pour véhicule automobile, qui comporte un dispositif de génération d'images tel que précité et un système de projection adapté à projeter ladite image dans le champ de vision du conducteur du véhicule automobile.

Préférentiellement alors, le système de projection comporte une lame au moins partiellement réfléchissante, qui est courbe afin d'avoir un effet de grossissement de l'image. Il peut s'agir d'un miroir de repliement (qui permet de diriger le faisceau lumineux dans la direction souhaitée), d'un combineur (qui permet de projeter l'image dans le champ de vision du combineur), ou encore du pare-brise lorsqu'il a une fonction de combineur.

L'invention concerne également un procédé de pilotage d'un dispositif de génération d'images tel que précité, comprenant :
- une étape d'acquisition d'une image à générer qui comprend au moins une information,
- une étape de segmentation de ladite image en différentes parties adaptées chacune à être principalement illuminée par un élément lumineux correspondant, au cours de laquelle le calculateur contrôle si, dans chacune des parties, se trouve tout ou partie de ladite au moins une information, et
- une étape de génération de ladite image, au cours de laquelle seuls les éléments lumineux correspondant aux parties de l'image dans lesquelles se trouve tout ou partie de ladite au moins une information sont pilotés pour s'éclairer.

### DESCRIPTION DÉTAILLÉE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique d'un afficheur tête-haute de véhicule automobile, conforme à l'invention ;
- la figure 2 est une vue schématique d'une partie du dispositif de génération d'images de l'afficheur tête-haute de la figure 1 ;
- la figure 3 est une vue schématique d'une image générée par l'afficheur tête-haute de la figure 1, telle qu'elle est vue par un conducteur, en superposition de la route que le véhicule automobile emprunte ;
- la figure 4 est une vue schématique de l'image de la figure 3, à laquelle est superposée un quadrillage ; et
- la figure 5 représente le quadrillage de la figure 4.

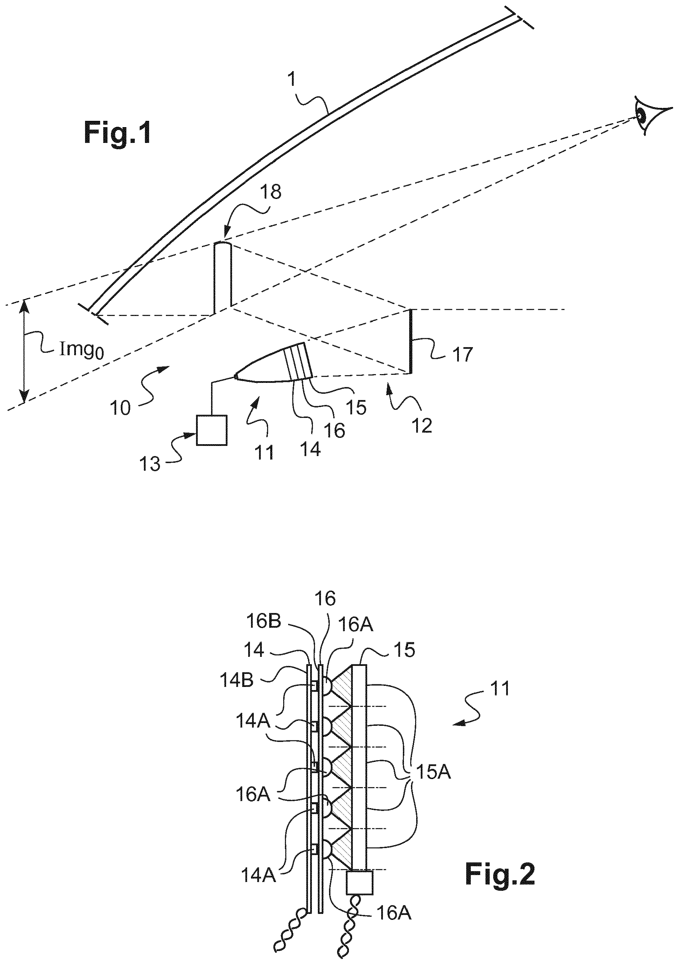

Sur la figure 1, on a représenté un afficheur tête-haute 10 destiné à équiper un véhicule, par exemple un véhicule automobile.

Cet afficheur tête-haute 10 comprend un dispositif de génération d'images 11 et un ensemble optique de projection 12 permettant de projeter l'image générée par le dispositif de génération d'images 11 dans le champ de vision du conducteur lorsque le regard de ce dernier est tourné vers la route.

Comme le montre la figure 1, l'ensemble optique de projection 12 est plus précisément conçu pour projeter une image virtuelle Img₀ dans le champ de vision du conducteur du véhicule, à une distance du conducteur qui est supérieure à celle séparant le conducteur du pare-brise 1 (si bien que les yeux du conducteur n'ont pas à effectuer de travail d'accommodation pour percevoir les informations projetées).

Dans le mode de réalisation représenté sur la figure 1, l'ensemble optique de projection 12 comporte à cet effet un système optique de renvoi 17 et un combineur 18 placé dans le champ de vision du conducteur du véhicule.

Le système optique de renvoi 17, qui comporte ici uniquement un miroir de repliement, permet de renvoyer l'image générée par le dispositif de génération d'image 11 vers le combineur 18.

Le combineur 18 permet de réfléchir cette image de telle manière qu'elle apparaisse au conducteur comme si elle était affichée à une grande distance de ce dernier.

Ici, ce combineur 18 est formé par une lame semi-réfléchissante qui est disposée dans l'habitacle du véhicule automobile, entre le pare-brise 1 du véhicule et les yeux du conducteur, et qui est incurvée de manière à agrandir la taille de l'image virtuelle Img₀ vue par le conducteur.

En variante, le combineur pourrait être formé par le pare-brise lui-même.

La présente invention porte plus précisément sur le dispositif de génération d'image 11, qui est du type « à modulation de lumière ».

Pour générer une image, un tel dispositif de génération d'image 11 comporte au minimum une source de lumière 14, un modulateur de lumière 15 adapté à moduler spatialement la lumière émise par la source de lumière 14, et un calculateur 13 adapté à piloter la source de lumière 14 et le modulateur de lumière 15 de telle manière qu'ils génèrent une image.

Par « moduler spatialement », on entend que le modulateur de lumière 15 est adapté à faire varier, sur une partie au moins de sa surface, l'intensité de la lumière qu'il transmet à l'ensemble optique de projection 12. On considérera ici que cette variation n'est pas binaire, en ce sens que chaque partie active du modulateur de lumière 15 pourra bloquer le passage de la lumière ou permettre ce passage, en modulant son intensité, de manière à former une image.

La source de lumière et le modulateur de lumière pourraient se présenter sous différentes formes.

Dans le mode de réalisation représenté sur les figures 1 et 2, le modulateur de lumière 15 est du genre « transmissif ». Il comporte un écran transmissif et la source de lumière 14 est adaptée à rétroéclairer cet écran.

En variante, comme cela sera décrit infra, le modulateur de lumière pourra être du genre « réflectif ».

Selon une caractéristique particulièrement avantageuse de l'invention, la source de lumière 14 est formée de plusieurs éléments lumineux 14A distincts, et le calculateur 13 est adapté à moduler l'intensité lumineuse émise par chaque élément lumineux 14A indépendamment des autres éléments lumineux 14A.

Comme le montre la figure 2, la source de lumière 14 est plus précisément ici formée par un circuit imprimé qui comporte une plaque support 14B (par exemple en bakélite) et, sur une face de cette plaque support, un réseau de diodes électroluminescentes 14A (qui forment lesdits éléments lumineux).

Ces diodes électroluminescentes 14A sont ici réparties de manière matricielle, sur au moins trois lignes et au moins quatre colonnes, et sont prévues pour émettre de la lumière selon des directions moyennes parallèles.

Elles sont plus précisément ici réparties sur cinq lignes et neuf colonnes. Il est donc ici prévu quarante-cinq diodes électroluminescentes 14A.

Le circuit imprimé est ici conçu de telle sorte que chacune de ces diodes électroluminescentes 14A est pilotée en courant indépendamment des autres.

Ces diodes électroluminescentes 14A sont ici prévues pour être pilotées entre un état allumé et un état éteint (préférentiellement avec une intensité modulable). Ainsi, une partie des diodes électroluminescentes 14A peut être allumée lorsque les autres sont maintenues éteintes.

Les intensités lumineuses émises par les diodes électroluminescentes 14A pilotées à l'état allumé sont ici prévues pour être égales.

Comme cela a été exposé supra, le modulateur de lumière est ici formé par un écran 15 transmissif. A titre d'exemple, il peut s'agir d'un écran à cristaux liquides (ou LCD pour "Liquid Crystal Display") à transistors en couche mince (ou TFT pour "Thin-Film Transistor").

Comme le montre la figure 2, cet écran 15 est situé dans un plan parallèle au plan dans lequel sont réparties les diodes électroluminescentes 14A. Il est situé à distance de ces diodes électroluminescentes 14A. Selon une variante non représentée, tout ou partie des diodes électroluminescentes sont disposées sur une surface courbe. Cela permet de sélectionner la directivité de l'éclairage des diodes. Selon cette variante, la face de la plaque support 14B qui reçoit les diodes peut être totalement ou partiellement courbe selon la directivité souhaitée.

On souhaite ici que chaque partie active (c'est-à-dire ici chaque cristal liquide) de l'écran 15 soit éclairée, et qu'elle ne soit éclairée que par une seule diode électroluminescente 14A, de telle manière que lorsque cette diode électroluminescente 14A s'éteint, aucune lumière n'atteigne cette partie active de l'écran 15.

Pour cela, le dispositif de génération d'images 11 comporte un ensemble optique 16 qui s'interpose entre la source de lumière 14 et l'écran 15 et qui confine la lumière émise par chaque diode électroluminescente 14A vers une zone correspondante de l'écran 15, appelée zone efficace 15A.

Comme le montre la figure 2, cet ensemble optique 16 comporte à cet effet ici un réseau de lentilles convergentes 16A, chacune située devant l'une des diodes électroluminescentes 14A.

En pratique, l'ensemble optique 16 comporte ici une plaque support 16B transparente, qui porte quarante-cinq lentilles convergentes 16A réparties de la même manière que les diodes électroluminescentes 14A.

Les lentilles convergentes 16A de cet ensemble optique 16 présentent des formes telles que chaque zone efficace 15A du modulateur de lumière 15 (dont on rappelle qu'elle est éclairée par une seule diode électroluminescente 14A correspondante) présente une forme rectangulaire.

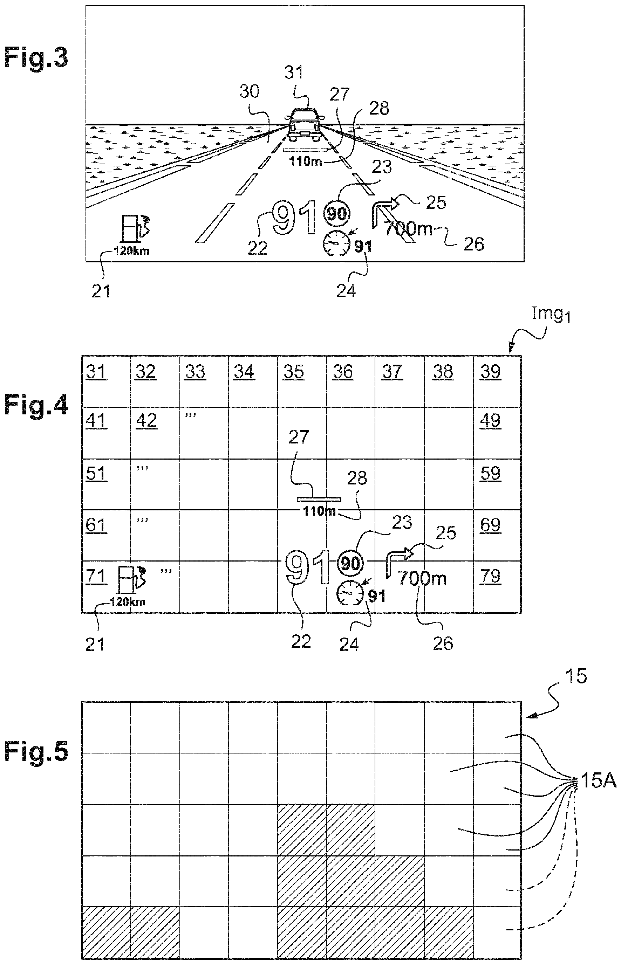

Sur la figure 5, on a illustré la répartition de ces zones efficaces 15A sur l'écran 15. On y observe que l'écran présente autant de zones efficaces 15A qu'il y a de diodes électroluminescentes 14A, et que les zones efficaces 15A sont reparties de la même manière que les diodes électroluminescentes 14A

Ainsi, les zones efficaces 15A de l'écran 15 sont réparties de manière matricielle, en cinq lignes et neuf colonnes. Elles sont contiguës de telle sorte que lorsque l'ensemble des diodes électroluminescentes 14A sont allumées, l'ensemble de l'écran 15 est éclairé, sans faire apparaître de zone d'ombre entre les zones efficaces 15A.

Sur la figure 4, on a représenté un exemple d'image Img₁ que le dispositif de génération d'images 11 peut être amené à générer.

Grâce au quadrillage tracé sur cette image Img₁, on comprend qu'il est possible de subdiviser cette image Img₁ en autant de parties 31 - 79 qu'il y a de zones efficaces 15A sur l'écran 15. En effet, chaque partie 31 - 79 de l'image Img₁ est prévue pour être formée par une zone efficace 15A de l'écran 15 éclairée par une diode électroluminescente 14A correspondante.

Dans l'exemple particulier représenté sur la figure 4, on distingue plusieurs « informations » sur cette image Img₁, à savoir :
- une information de niveau de carburant 21, qui correspond à une estimation de la distance pouvant encore être parcourue avant panne d'essence,
- une information de vitesse instantanée 22, qui correspond à la vitesse instantanée du véhicule automobile,
- une information de limite de vitesse 23 qui correspond à la limite de vitesse autorisée sur la route empruntée,
- une information de vitesse de régulation 24, qui correspond à la vitesse que le conducteur a programmée sur son régulateur de vitesse,
- une information de direction 25 qui correspond à la direction du prochain embranchement,
- une information de distance avant embranchement 26 qui correspond à la distance séparant le véhicule de ce prochain embranchement,
- une information d'obstacle 27 se présentant ici sous la forme d'un trait mettant en valeur la présence d'un obstacle, et
- une information de distance 28 qui correspond à la distance séparant le véhicule de cet obstacle.

Sur la figure 3, pour bien illustrer la présente invention, on a représenté schématiquement ce que le conducteur peut voir au travers du combineur 18, lorsque l'image Img₁ est projetée vers ce combineur 18.

On y observe qu'il peut voir la route 30 qui s'étend devant lui et sur laquelle circule ici un véhicule automobile 31 qui le précède (considéré ici comme un obstacle).

Il peut également voir, en superposition de la route 30, l'image Img₁ générée par le dispositif de génération d'images 11. On comprend ainsi que information d'obstacle 27 (se présentant sous la forme d'un trait) permet de souligner la présence du véhicule automobile 31.

On peut maintenant décrire plus en détail le calculateur 13, dont on rappelle qu'il est conçu pour piloter l'allumage et l'extinction des diodes électroluminescente 14A, indépendamment les unes des autres, et pour piloter l'écran 15, de manière que l'afficheur tête-haute 10 puisse projeter des informations utiles dans le champ de vision du conducteur.

Ce calculateur 13 comporte un processeur (CPU), une mémoire vive (RAM), une mémoire morte (ROM), des moyens d'acquisition d'une image à générer, et une interface de sortie.

Grâce à ses moyens d'acquisition, le calculateur 13 est adapté à recevoir à intervalles réguliers une image à projeter dans le champ de vision du conducteur, du type de celle représentée sur la figure 4.

La mémoire morte mémorise quant à elle des données utilisées dans le cadre du procédé décrit ci-dessous.

Elle mémorise notamment une application informatique, constituée de programmes d'ordinateur comprenant des instructions dont l'exécution par le processeur permet la mise en oeuvre par le calculateur 13 du procédé décrit ci-après.

Cette application information comprend notamment un programme de détection adaptés à contrôler si, dans chaque partie 31 - 79 de l'image à générer, se trouve une information à afficher, et un programme de pilotage adapté à élaborer une consigne de pilotage des diode électroluminescente 14A et de l'écran 15.

Enfin, grâce à ses interfaces de sortie, le calculateur 13 est adapté à transmettre des signaux de commande aux différents composants du dispositif de génération d'images 11, de manière à ce que ce dernier projette ladite image dans le champ de vision du conducteur.

Le calculateur 13 est alors adapté à mettre en oeuvre, de manière répétée et à intervalles réguliers, un procédé de pilotage comportant les étapes suivantes.

Au cours d'une première étape d'acquisition, le calculateur 13 acquiert l'image à générer. A titre d'exemple, il peut pour cela transmettre à une unité d'imagerie un signal de requête de manière que celle-ci lui renvoie l'image à générer, sous la forme d'un fichier lisible (par exemple au format « .gif »).

Au cours d'une seconde étape, dite de segmentation, le calculateur 13 divise l'image en plusieurs parties 31 - 79 (dont on rappelle qu'elles correspondent chacune à une zone efficace 15A de l'écran 15 et à une diode électroluminescente 14A particulière de la source de lumière 14).

Le calculateur 13 contrôle ensuite chaque partie 31 - 79 de l'image, pour déterminer s'il se trouve une partie au moins d'une information 21 - 28 dans chaque partie 31 - 79 de l'image.

A titre d'illustration, sur la figure 5, on a hachuré les zones efficaces 15A de l'écran 15 correspondant aux parties de l'image sur lesquelles se trouvent des informations à afficher.

Au cours d'une troisième étape, le calculateur 13 élabore une consigne de pilotage de la source de lumière 14 et une consigne de pilotage de l'écran 15.

Si la consigne de pilotage de l'écran 15 est élaborée de manière classique (si bien que son élaboration ne sera pas ici décrite), la consigne de pilotage de la source de lumière 14 est élaborée de manière particulière.

Cette consigne de pilotage est élaborée de manière que seules les diodes électroluminescentes 14A correspondant aux parties 31 - 79 de l'image dans lesquelles se trouvent les informations 21 - 28 à afficher soient commandées à l'état allumé. Les autres diodes électroluminescentes 14A sont quant à elles commandées à l'état éteint.

Au cours d'une dernière étape, les deux consignes de pilotage sont transmises à la source de lumière 14 et à l'écran 15.

On comprend alors que dans l'exemple représenté sur les figures, seules onze des quarante-cinq diodes électroluminescentes 14A sont pilotées à l'état allumé tandis que les autres sont pilotées à l'état éteint.

La consommation électrique de la source de lumière 14 est alors divisée par quatre par rapport à celle qu'aurait cette même source de lumière si l'ensemble des diodes électroluminescentes 14A étaient pilotées à l'état allumé.

La présente invention n'est nullement limitée au mode de réalisation décrit et représenté, mais l'homme du métier saura y apporter toute variante conforme à son esprit.

Ainsi, à titre d'exemple, on pourrait prévoir de moduler les intensités lumineuses des diodes électroluminescentes allumées, les unes par rapport aux autres. Ainsi, au moins une des diodes électroluminescentes pourrait être pilotée pour développer une intensité lumineuse égale à la moitié de l'intensité lumineuse développée par une autre des diodes électroluminescentes. Cela permettra de moduler l'intensité lumineuse des informations affichées les unes par rapport aux autres. En variante, il sera possible de moduler cette intensité lumineuse en utilisant pour cela, non plus les diodes électroluminescentes, mais plutôt le modulateur de lumière (15).

Selon une variante de l'invention, chaque élément lumineux de la source de lumière pourra être formé non pas d'une simple diode électroluminescente, mais d'un groupe de plusieurs diodes électroluminescentes.

Selon une autre variante de l'invention, l'ensemble optique (dont on rappelle qu'il est conçu pour confiner la lumière émise par chaque élément lumineux vers chaque zone efficace correspondante de l'écran) pourra être formé, non plus par des lentilles convergentes, mais par exemple par des cloisons s'étendant entre la source de lumière et l'écran, autour de chaque élément lumineux.

Encore en variante, comme cela a été expliqué supra, le modulateur de lumière pourra être non pas un écran transmissif, mais un système réflectif. Un tel système réflectif peut par exemple fonctionner selon une technologie Lcos (cristaux liquides sur silicium) ou DLP (traitement numérique de la lumière). Dans ces deux technologies, il est prévu d'utiliser un ensemble de « volets », formant une sorte de panneau réflectif. Chaque volet est alors conçu pour prendre deux états distincts afin de réfléchir ou non la lumière vers l'ensemble optique de projection (12).

Dans cette variante, chaque diode électroluminescente sera prévue pour éclairer un ensemble de volets. Alors, selon l'invention, lorsque l'ensemble des volets associés à une diode électroluminescente seront pilotés pour ne pas réfléchir la lumière, on pourra commander l'extinction de cette diode électroluminescente afin de réduire la consommation électrique de la source de lumière.

## Revendications

1. Dispositif de génération d'images (11) pour afficheur tête-haute (10) d'un dispositif d'aide à la conduite de véhicules automobiles, comprenant :
- une source de lumière (14),
- un modulateur de lumière (15) adapté à moduler spatialement la lumière émise par la source de lumière (14), et
- un calculateur (13) adapté à piloter la source de lumière (14) et le modulateur de lumière (15) de telle manière qu'ils génèrent une image,
**caractérisé en ce que** la source de lumière (14) est formée par un circuit imprimé qui comporte une plaque de support (14B) et, sur une face de cette plaque de support, un réseau de diodes électroluminescentes (14A) formant plusieurs éléments lumineux (14A) distincts, et
**en ce que** le calculateur (13) est adapté à moduler l'intensité lumineuse émise par chaque élément lumineux (14A) indépendamment des intensités lumineuses émises par les a utres éléments lumineux (14A) de sorte que seules les parties du modulateur de lumière devant afficher des informations sont éclairées par les éléments lumineux de la source de lumière, les autres éléments lumineux étant laissés éteints si bien que les parties du modulateur de lumière ne devant afficher aucune information ne sont pas éclairées,
et dans lequel il est prévu un ensemble optique (16) qui s'interpose entre la source de lumière (14) et le modulateur de lumière (15) et qui confine la lumière émise par chaque élément lumineux (14A) vers une zone efficace (15A) correspondante du modulateur de lumière (15),
l'ensemble optique (16) comportant un réseau de lentilles convergentes (16A), chacune située devant l'une des diodes électroluminescentes (14A).

2. Dispositif de génération d'images (11) selon la revendication précédente, dans lequel l'ensemble optique (16) est tel que chaque zone efficace (15A) du modulateur de lumière (15) est distincte des autres zones efficaces (15A) et contigu à d'autres zones efficaces (15A).

3. Dispositif de génération d'images (11) selon l'une des deux revendications précédentes, dans lequel, l'image à générer étant composée de différentes parties (31 - 79) chacune adaptée à être formée par une des zones efficaces (15A) du modulateur de lumière (15) et par l'élément lumineux (14A) correspondant, le calculateur (13) comporte :
- des moyens d'acquisition de l'image à générer,
- des moyens de détection adaptés à contrôler si, dans chaque partie (31 - 79) de l'image à générer, se trouve une information à afficher, et
- des moyens de pilotage de la source de lumière (14) adaptés à illuminer seulement les éléments lumineux (14A) correspondant aux parties de l'image dans lesquelles se trouve une information à afficher.

4. Dispositif de génération d'images (11) selon l'une des revendications précédentes, dans lequel les éléments lumineux (14A) sont situés dans un même plan et sont répartis en colonnes et en lignes.

5. Dispositif de génération d'images (11) selon l'une des revendications 1 à 3, dans lequel tout ou partie des éléments lumineux (14A) sont situés sur une surface courbe et sont répartis en colonnes et en lignes.

6. Dispositif de génération d'images (11) selon la revendication 4 ou 5, dans lequel il est prévu au moins trois lignes d'éléments lumineux (14A) et au moins quatre colonnes d'éléments lumineux (14A).

7. Dispositif de génération d'images (11) selon l'une des revendications 1 à 6, dans lequel le modulateur de lumière (15) comporte un écran transmissif et la source de lumière (14) est adaptée à rétroéclairer ledit écran transmissif.

8. Dispositif de génération d'images (11) selon l'une des revendications 1 à 6, dans lequel le modulateur de lumière (15) comporte un panneau réflectif composé de volets pouvant prendre deux états distincts, à savoir un état dans lequel le volet réfléchit la lumière reçue de la source de lumière (14) dans une direction souhaitée et un état dans lequel le volet ne réfléchit pas la lumière reçue de la source de lumière (14) dans ladite direction souhaitée.

9. Afficheur tête-haute (10) pour véhicule automobile, **caractérisé en ce qu'**il comporte un dispositif de génération d'images (11) conforme à l'une des revendications précédentes, et un système de projection (12) adapté à projeter ladite image dans le champ de vision du conducteur du véhicule automobile.

10. Afficheur tête-haute (10) selon la revendication précédente, dans lequel le système de projection (12) comporte une lame au moins partiellement réfléchissante qui est courbe.

11. Procédé de pilotage d'un dispositif de génération d'images (11) conforme à l'une des revendications 1 à 8, comprenant :
- une étape d'acquisition d'une image à générer qui comprend au moins une information,
- une étape de segmentation de ladite image en différentes parties (31 - 79) adaptées chacune à être principalement illuminée par un élément lumineux (14A) correspondant, au cours de laquelle le calculateur (13) contrôle si, dans chacune desdites parties (31 - 79), se trouve tout ou partie de ladite au moins une information, et
- une étape de génération de ladite image, au cours de laquelle seuls les éléments lumineux (14A) correspondant aux parties (31 - 79) de l'image dans lesquelles se trouve tout ou partie de ladite au moins une information sont pilotés pour s'éclairer.

## Patentansprüche

1. Bilderzeugungsvorrichtung (11) für ein Head-up-Display (10) einer Fahrassistenzvorrichtung von Kraftfahrzeugen, die enthält:
- eine Lichtquelle (14),
- einen Lichtmodulator (15), der geeignet ist, das von der Lichtquelle (14) emittierte Licht räumlich zu modulieren, und
- einen Rechner (13), der geeignet ist, die Lichtquelle (14) und den Lichtmodulator (15) so zu steuern, dass sie ein Bild erzeugen,
**dadurch gekennzeichnet, dass** die Lichtquelle (14) von einer Leiterplatte gebildet wird, die eine Trägerplatte (14B) und auf einer Seite dieser Trägerplatte ein Netzwerk von Elektrolumineszenzdioden (14A) aufweist, die mehrere getrennte Leuchtelemente (14A) bilden, und dass der Rechner (13) geeignet ist, die von jedem Leuchtelement (14A) emittierte Leuchtstärke unabhängig von den von den anderen Leuchtelementen (14A) emittierten Leuchtstärken zu modulieren, so dass nur die Teile des Lichtmodulators, die Informationen anzeigen sollen, von den Leuchtelementen der Lichtquelle beleuchtet werden, während die anderen Leuchtelemente ausgeschaltet gelassen werden, so dass die Teile des Lichtmodulators, die keine Information anzeigen sollen, nicht beleuchtet werden,
und wobei eine optische Einheit (16) vorgesehen ist, die sich zwischen die Lichtquelle (14) und den Lichtmodulator (15) einfügt und die das von jedem Leuchtelement (14A) zu einem entsprechenden wirksamen Bereich des Lichtmodulators (15) emittierte Licht beschränkt,
wobei die optische Einheit (16) ein Netzwerk von konvergierenden Linsen (16A) aufweist, die sich je vor einer der Elektrolumineszenzdioden (14A) befinden.

2. Bilderzeugungsvorrichtung (11) nach dem vorhergehenden Anspruch, wobei die optische Einheit (16) so ist, dass jeder wirksame Bereich (15A) des Lichtmodulators (15) sich von den anderen wirksamen Bereichen (15A) unterscheidet und an andere wirksame Bereichen (15A) angrenzt.

3. Bilderzeugungsvorrichtung (11) nach einem der vorhergehenden Ansprüche, wobei, da das zu erzeugende Bild aus verschiedenen Teilen (31 - 79) zusammengesetzt ist, die je geeignet sind, von einem der wirksamen Bereiche (15A) des Lichtmodulators (15) und vom entsprechenden Leuchtelement (14A) gebildet zu werden, der Rechner (13) aufweist:
- Erfassungseinrichtungen des zu erzeugenden Bilds,
- Erkennungseinrichtungen, die geeignet sind zu überprüfen, ob in jedem Teil (31 - 79) des zu erzeugenden Bilds sich eine anzuzeigende Information befindet, und
- Steuereinrichtungen der Lichtquelle (14), die geeignet sind, nur die den Teilen des Bilds, in denen sich eine anzuzeigende Information befindet, entsprechenden Leuchtelemente (14A) zu beleuchten.

4. Bilderzeugungsvorrichtung (11) nach einem der vorhergehenden Ansprüche, wobei die Leuchtelemente (14A) sich in einer gleichen Ebene befinden und in Spalten und Zeilen verteilt sind.

5. Bilderzeugungsvorrichtung (11) nach einem der Ansprüche 1 bis 3, wobei alle oder ein Teil der Leuchtelemente (14A) sich auf einer gekrümmten Fläche befinden und in Spalten und Zeilen verteilt sind.

6. Bilderzeugungsvorrichtung (11) nach Anspruch 4 oder 5, wobei mindestens drei Zeilen von Leuchtelementen (14A) und mindestens vier Spalten von Leuchtelementen (14A) vorgesehen sind.

7. Bilderzeugungsvorrichtung (11) nach einem der Ansprüche 1 bis 6, wobei der Lichtmodulator (15) ein transmissives Display aufweist, und die Lichtquelle (14) geeignet ist, das transmissive Display zu hinterleuchten.

8. Bilderzeugungsvorrichtung (11) nach einem der Ansprüche 1 bis 6, wobei der Lichtmodulator (15) eine reflektierende Platte aufweist, die aus Flügeln zusammengesetzt ist, die zwei unterschiedliche Zustände annehmen können, nämlich einen Zustand, in dem der Flügel das von der Lichtquelle (14) empfangene Licht in eine gewünschte Richtung reflektiert, und einen Zustand, in dem der Flügel das von der Lichtquelle (14) empfangene Licht nicht in die gewünschte Richtung reflektiert.

9. Head-up-Display (10) für ein Kraftfahrzeug, **dadurch gekennzeichnet, dass** es eine Bilderzeugungsvorrichtung (11) nach einem der vorhergehenden Ansprüche und ein Projektionssystem (12) aufweist, das geeignet ist, das Bild in das Sichtfeld des Fahrers des Kraftfahrzeugs zu projizieren.

10. Head-up-Display (10) nach dem vorhergehenden Anspruch, wobei das Projektionssystem (12) ein zumindest teilweise reflektierendes Plättchen aufweist, das gekrümmt ist.

11. Verfahren zur Steuerung einer Bilderzeugungsvorrichtung (11) nach einem der Ansprüche 1 bis 8, das enthält:
- einen Schritt der Erfassung eines zu erzeugenden Bilds, das mindestens eine Information enthält,
- einen Schritt der Segmentierung des Bilds in verschiedene Teile (31 - 79), die je geeignet sind, hauptsächlich von einem entsprechenden Leuchtelement (14A) beleuchtet zu werden, während dessen der Rechner (13) überprüft, ob in jedem der Teile (31 - 79) die mindestens eine Information sich ganz oder teilweise befindet, und
- einen Schritt der Erzeugung des Bilds, während dessen nur die den Teilen (31 - 79) des Bilds, in denen sich die mindestens eine Information ganz oder teilweise befindet, entsprechenden Leuchtelemente (14A) gesteuert werden, um zu leuchten.

## Claims

1. Image-generation device (11) for a head-up display (10) of a motor vehicle driving assistance device, comprising:
- a light source (14),
- a light modulator (15) suitable for spatially modulating the light emitted by the light source (14), and
- a computer (13) suitable for driving the light source (14) and the light modulator (15) in such a way that they generate an image,
**characterized in that** the light source (14) is formed by a printed circuit which comprises a support plate (14B) and, on one face of this support plate, an array of light-emitting diodes (14A) forming several distinct light elements (14A), and
**in that** the computer (13) is suitable for modulating the light intensity emitted by each light element (14A) independently of the light intensities emitted by the other light elements (14A) such that only the parts of the light modulator that have to display information are lit by the light elements of the light source, the other light elements being left off so that the parts of the light modulator that do not have to display any information are not lit,
and in which an optical assembly (16) is provided which is interposed between the light source (14) and the light modulator (15) and which contains the light emitted by each light element (14A) towards a corresponding effective zone (15A) of the light modulator (15),
the optical assembly (16) comprising an array of convergent lenses (16A), each situated in front of one of the light-emitting diodes (14A).

2. Image-generation device (11) according to the preceding claim, wherein the optical assembly (16) is such that each effective zone (15A) of the light modulator (15) is distinct from the other effective zones (15A) and contiguous to other effective zones (15A).

3. Image-generation device (11) according to one of the two preceding claims wherein, the image to be generated being composed of different parts (31 - 79) each adapted to be formed by one of the effective zones (15A) of the light modulator (15) and by the corresponding light element (14A), the computer (13) comprises:
- means for acquiring the image to be generated,
- detection means suitable for checking if, in each part (31 - 79) of the image to be generated, there is information to be displayed, and
- means for driving the light source (14) suitable for illuminating only the light elements (14A) corresponding to the parts of the image in which there is information to be displayed.

4. Image-generation device (11) according to one of the preceding claims, wherein the light elements (14A) are situated in a same plane and are divided up into columns and rows.

5. Image-generation device (11) according to one of Claims 1 to 3, wherein all or part of the light elements (14A) is or are situated on a curved surface and are divided up into columns and rows.

6. Image-generation device (11) according to Claim 4 or 5, wherein at least three rows of light elements (14A) and at least four columns of light elements (14A) are provided.

7. Image-generation device (11) according to one of Claims 1 to 6, wherein the light modulator (15) comprises a transmissive screen and the light source (14) is suitable for backlighting said transmissive screen.

8. Image-generation device (11) according to one of Claims 1 to 6, wherein the light modulator (15) comprises a reflective panel composed of flaps that can take two distinct states, namely a state in which the flap reflects the light received from the light source (14) in a desired direction and a state in which the flap does not reflect the light received from the light source (14) in said desired direction.

9. Head-up display (10) for a motor vehicle, **characterized in that** it comprises an image-generation device (11) according to one of the preceding claims, and a projection system (12) suitable for projecting said image in the visual field of the driver of the motor vehicle.

10. Head-up display (10) according to the preceding claim, wherein the projection system (12) comprises an at least partially reflecting plate which is curved.

11. Method for driving an image-generation device (11) according to one of Claims 1 to 8, comprising:
- a step of acquisition of an image to be generated which comprises at least one piece of information,
- a step of segmentation of said image into different parts (31 - 79) each adapted to be primarily illuminated by a corresponding light element (14A), during which the computer (13) checks if, in each of said parts (31 - 79), there is all or part of said at least one piece of information, and
- a step of generation of said image, during which only the light elements (14A) corresponding to the parts (31 - 79) of the image in which there is all or part of said at least one piece of information are driven to be lit.
